Europäisches Patentamt

(19) European Patent Office

Office européen des brevets

(11) EP 0 661 243 B1

(12) EUROPEAN PATENT SPECIFICATION

(45) Date of publication and mention
of the grant of the patent:
08.12.1999 Bulletin 1999/49

(51) Int. Cl.$^6$: C04B 35/42, H01M 8/02

(21) Application number: 94120752.4

(22) Date of filing: 27.12.1994

(54) **Lanthanum chromite-based ceramics, separators containing same and solid electrolyte fuel cells using separators**

Keramik auf Basis von Lanthanchromit, Separatoren dieses enthaltend und Festelektrolyt-Brennstoffzellen mit diesen Separatoren

Céramiques à base de chromite de lanthane, séparateurs les contenant et piles à combustible à électrolyte solide utilisant ces séparateurs

(84) Designated Contracting States:
DE FR GB

(30) Priority: 28.12.1993 JP 33870393
28.09.1994 JP 23371494

(43) Date of publication of application:
05.07.1995 Bulletin 1995/27

(73) Proprietors:
• TONEN CORPORATION
Tokyo 150-8411 (JP)
• PETROLEUM ENERGY CENTER
Tokyo 105-0001 (JP)

(72) Inventors:
• Someya, Yoshiyuki,
c/o Tonen Corp. Corporate Res.
Iruma-gun, Saitama-ken, 356 (JP)
• Mukaizawa, Isao,
c/o Tonen Corp. Corporate Res.
Iruma-gun, Saitama-ken, 356 (JP)

• Ando, Motoo,
c/o Tonen Corp. Corporate Res.
Iruma-gun, Saitama-ken, 356 (JP)
• Wakayama, Shin-Ichi,
c/o Tonen Corp. Corporate Res
Iruma-gun, Saitama-ken, 356 (JP)
• Yoshida, Toshihiko,
c/o Tonen Corp. Corporate Res.
Iruma-gun, Saitama-ken, 356 (JP)

(74) Representative:
Winter, Brandl, Fürniss, Hübner, Röss,
Kaiser, Polte, Kindermann
Partnerschaft
Patent- und Rechtsanwaltskanzlei
Alois-Steinecker-Strasse 22
85354 Freising (DE)

(56) References cited:
EP-A- 0 411 547          EP-A- 0 447 717

**Description**

BACKGROUND OF THE INVENTION

Field of the Invention

The present invention concerns novel lanthanum chromite-based ceramics, a plate type solid electrolyte fuel cell containing the ceramics and a plate type solid electrolyte fuel cell using the separator.

Description of the Related Art

Lanthanum chromite ($LaCrO_3$) has electroconductivity at high temperature and is excellent in oxidation resistance and reduction resistance and, accordingly, is an oxide ceramics promising as a high temperature conductive material.

Electroconductivity of lanthanum chromite can be improved by doping an alkaline earth metal such as calcium, strontium or magnesium as trace impurities. Lanthanum chromite has a perovskite structure $ABO_3$, in which the letter A represents lanthanum, the letter B represents chromium, the letter O represents oxygen, and calcium or strontium doped therein is substitutionally solid-solubilized in a lanthanum position in the lanthanum chromite lattice while magnesium is substitutionally solid-solubilized in a chromium position in the lanthanum chromite lattice.

Although trace element-doped lanthanum chromite has a sufficient performance regarding the conductivity, it is difficult to obtain dense sintered products in an atmosphere under a normal pressure, so that fuel gas can not completely be separated from air when it is used as a separator in a plate type solid electrolyte fuel cell and is not yet satisfactory.

Dense sintered products can not be obtained easily for the addition type lanthanum chromite, because diffusion of ions of structural elements is extremely slow, the grain boundaries of crystals of powdery raw materials less migrate and therfore they can not be densified easily in the course of sintering, as well as because the vapor pressure of chromium oxide is high at a sintering temperature, and vacant pores are not eliminated easily in the course of densification but remain as they are in the sintered products.

In view of the above, the present inventors, et al have already proposed a novel lanthanum chromite-based complex oxide represented by the general formula:

$$La_{1-x}M_xCr_{1-y}Co_yO_3$$

where M represents an alkaline earth metal except for magnesium, $0<x \leq 0.5$ and $0 \leq y<0.5$ and having a perovskite structure, a high temperature conductive material and a solid electrolyte fuel cell separator using the same (Japanese Patent Application No.65517/1991).

However, if the lanthanum chromite-based complex oxide contains a great amount of substitution elements, it causes volume change due to increase of the lattice constant of crystals at a low oxygen partial pressure in a reducing atmosphere, which results in internal stresses to sintered products and may cause fine cracks at the inside of the sintered products or cause breakage of the sintered products, to thereby lower the strength.

Further, when this material is used as a separator for a plate type solid electrolyte fuel cell having atmospheres which are different between both sides, namely, an oxidizing atmosphere and a reducing atmosphere, the strength is lowered to result in breakage, or separator warps due to the elongation on the side of the reducing atmosphere as a result of volume increase near the surface on the side of the reducing atmosphere, to bring about a problem of contact failure between the electrode and the separator, induction of breakage in the electrolyte and the reduction of the sealing performance.

Further, when the material is used as the separator, although it has a sufficient performance in view of the conductivity and the sinterability, the heat expansion coefficient of the material does not always match with that of the electrolyte as the constituent material of the plate type solid electrolyte fuel cell. For instance, if a cell of a plate type structure has a large area of 20 cm square or greater, a tensile or compressive stress is caused to the electrolyte due to the difference of the heat expansion coefficient between the separator and the electrolyte upon rise or fall of temperature, which destroys the electrolyte, failing to obtain a sufficient sealing performance.

Further, in case of substituting lanthanum with Ca in a lanthanum lattice position in the crystal lattice, if the addition amount of Ca is excessive, it results in a problem of forming a high resistance complex oxide of Ca and Cr on the side of the reducing atmosphere or diffusion of Ca into the cathode electrode. That is, for attaining stable sintered products, delicate control for the composition is necessary in the case of Ca-substituted lanthanum chromite. Further, the Ca-substituted lanthanum chromite has an orthorhombic crystal structure at a room temperature, which exhibits change of heat expansion coefficient accompanying the phase change at 300-500 °C as a result of the temperature

2

dependence of the heat expansion coefficient, so that a difference of the heat expansion coefficient relative to that of the electrolyte occurs near the above-mentioned temperature to cause excess stresses in the electrolyte in the course of rise or fall of temperature.

OBJECT OF THE INVENTION

Under such circumstances, an object of the present invention is to provide specific lanthanum chromite-based ceramics which can be obtained easily with high density in an atmospheric air, has high density and satisfactory conductivity, shows less temperature dependence of the heat expansion coefficient and less dimensional change rate and is excellent in the dimensional stability; a separator for a plate-type solid electrolyte fuel cell containing the ceramics, which has improved sealing performance and good contact with an electrode, satisfactory matching of the heat expansion coefficient with that of the electrolyte, shows less dimensional change in a reducing atmosphere at a low oxygen partial pressure and is excellent in oxidation resistance and reduction resistance; as well as a plate type solid electrolyte fuel cell using this separator.

SUMMARY OF THE INVENTION

As described previously, the present inventors have already proposed ceramics in which a portion of lanthanum is substituted with alkaline earth metals and a portion of Cr is substituted with Co or the like for densifying lanthanum chromite and improving the conductivity. Subsequently, the present inventors have further found:

that the proposed ceramics may possibly damage stabilized zirconia which is a solid electrolyte in a practical application, since the ceramics have a large difference of the heat expansion coefficient relative to that of zirconia, that the ceramics show large dimensional change during reduction, to cause warpage and result in destruction when they are used as a separator for a plate type solid electrolyte fuel cell, that the drawbacks are attributable to inadequate amount of substitution at the A site and the B site and inadequate combination of the substituent elements, as well as that lanthanum chromite having specified amount of substitution and specified combination of substituent elements has reduced difference of the heat expansion coefficient relative to that of the electrolyte, no abrupt change of temperature dependence within a range from a room temperature to 1000 °C , decreased dimensional change rate, hence, decreased volume change rate for each of the ceramics in an air atmosphere and a reducing atmosphere, excellent dimensional stability, and can maintain high density and high conductivity and, further, that a solid electrolyte fuel cell can be constituted at a good reproducibility, and have accomplished the present invention based on such findings.

That is, the present invention provides:

(1) lanthanum chromite-based ceramics represented by the general formula $(La_{1-x}Sr_x)_a(Cr_{1-y}Co_y)_bO_3$ where $0.02 \leq x \leq 0.2$, $0.01 \leq y \leq 0.03$, $0.95 \leq a/b \leq 1.05$,

having perovskite structure with a hexagonal lattice structure as analyzed by powder X-ray diffractiometry at room temperature and having a dimensional change rate of 0.1% or less at room temperature for products submitted to heat treatment at 1 000°C in a reducing atmosphere at an oxygen partial pressure of $5 \times 10^{-16}$ (atm) for 10 hours relative to that for products submitted to heat treatment at 1000°C in air, and having a relative density of 90% or greater, in which the electric conductivity $\sigma_{1000,air}$ at 1000°C in air and conductivity $\sigma_{1000,red}$ at 1000°C in a reducing atmosphere at an oxygen partial pressure of $1 \times 10^{-15}$ (atm) satisfy the following equation:

$$10 \leq \sigma_{1000,air} (\Omega^{-1} cm^{-1}) \text{ and } 1 \leq \sigma_{1000,red} (\Omega^{-1} cm^{-1})$$

the heat expansion coefficient a, as measured in the range of from 50°C to 1000°C satisfies the following equation:

$$9.8 \times 10^{-6} \leq \alpha \leq 10.7 \times 10^{-6} (1/K), \text{ and}$$

having a 4-point bending strength at a room temperature of 10 (kgf/mm$^2$) or greater according to JIS R1601,

(2) lanthanum chromite-based ceramics represented by the general formula $(La_{1-x}Sr_x)_a(Cr_{1-y}Ni_y)_bO_3$ where

$0.02 \leq x \leq 0.2,\ 0.02 \leq y \leq 0.1,\ 0.95 \leq a/b \leq 1.05$ ,

having perovskite structure with a hexagonal lattice structure analyzed by powder X-ray diffraction method at room temperature, and having a dimensional change rate of 0.1% or less at room temperature for products submitted to heat treatment at 1000°C in a reducing atmosphere at an oxygen partial pressure of $5 \times 10^{-16}$ (atm) for 10 hours relative to that for products submitted to heat treatment at 1000°C in air, and having a relative density of 90% or greater, in which

the electric conductivity $\sigma_{1000,air}$ at 1000°C in air and conductivity $\sigma_{1000,red}$ at 1000°C in a reducing atmosphere at an oxygen partial pressure of $1 \times 10^{-15}$ (atm) satisfy the following equation:

$$10 \leq \sigma_{1000,air}\ (\Omega^{-1}\ cm^{-1})\ \text{and}\ 1 \leq \sigma_{1000,red}\ (\Omega^{-1}\ cm^{-1})$$

the heat expansion coefficient $\alpha$, as measured in the range of from 50°C to 1000°C satisfies the following equation:

$$9.8 \times 10^{-6} \leq \alpha \leq 10.7 \times 10^{-6}\ (1/K),\ \text{and}$$

having a 4-point bending strength at room temperature of 10 (kgf/mm$^2$) or greater according to JIS R1601,

(3) lanthanum chromite-based ceramics represented by the general formula $(La_{1-x}Sr_x)_a(Cr_{1-y}M_y)_bO_3$ where $0.02 \leq x \leq 0.2,\ 0.02 \leq y \leq 0.05,\ 0.95 \leq a/b \leq 1.05$ , and M = Zn, Fe or Mn

having perovskite structure with a hexagonal lattice structure as analyzed by powder X-ray diffraction method at room temperature, and having a dimensional change rate of 0.1% or less at room temperature for products submitted to heat treatment at 1000°C in a reducing atmosphere at an oxygen partial pressure of $5 \times 10^{-16}$ (atm) for 10 hours relative to that for products submitted to heat treatment at 1000°C in air, and having a relative density of 90% or greater, in which

the electric conductivity $\sigma_{1000,air}$ at 1000°C in air and conductivity $\sigma_{1000,red}$ at 1000°C in a reducing atmosphere at an oxygen partial pressure of $1 \times 10^{-15}$ (atm) satisfy the following equation:

$$10 \leq \sigma_{1000,air}\ (\Omega^{-1}\ cm^{-1})\ \text{and}\ 1 \leq \sigma_{1000,red}\ (\Omega^{-1}\ cm^{-1})$$

heat expansion coefficient $\alpha$, as measured in the range of from 50°C to 1000°C satisfies the following equation:

$$9.8 \times 10^{-6} \leq \alpha \leq 10.7 \times 10^{-6}\ (1/K),\ \text{and}$$

having a 4-point bending strength at room temperature of greater than 10 (kgf/mm$^2$) according to JIS R1601,

(4) a plate type solid electrolyte fuel cell separator containing the lanthanum chromite-based ceramics as defined in (1), (2) or (3) above, as well as (5) a plate type solid electrolyte fuel cell using the separator described above.

As preferred embodiments, there can be mentioned, for example

(6) lanthanum chromite-based ceramics as defined in (1) above in which the suffix y representing the Co substitution amount in the general formula showing the composition is within a range capable of satisfying the equation:

$$0.015 \leq y \leq 0.025,$$

(7) lanthanum chromite-based ceramics as defined in (2) above in which the suffix y representing the Ni substitution amount in the general formula showing the composition is within a range capable of satisfying the equation:

$$0.03 \leq y \leq 0.08,$$

(8) lanthanum chromite-based ceramics as defined in (3) above in which the suffix y representing the M substitution amount in the general formula showing the composition is within a range capable of satisfying the equation:

$$0.03 \leq y \leq 0.05,$$

(9) lanthanum chromite-based ceramics as defined in (1), (2), (3), (6), (7) or (8) above in which the suffix x representing the Sr substitution amount in the general formula showing the composition is within a range from 0.04 to 0.2,

(10) lanthanum chromite-based ceramics as defined in (9) above in which the suffix x is within a range from 0.08 to 0.15.

The lanthanum chromite-based ceramics according to the present invention, as described above, are represented by the general formula: $(La_{1-x}Sr_x)_a(Cr_{1-y}Co_y)_bO_3$ in which
$0.02 \leq x \leq 0.3$, $0.01 \leq y \leq 0.03$, $0.95 \leq a/b \leq 1.05$, the general formula $(La_{1-x}Sr_x)_a(Cr_{1-y}Ni_y)_bO_3$ in which
$0.02 \leq x \leq 0.3$, $0.02 \leq y \leq 0.1$, $0.95 \leq a/b \leq 1.05$, the general formula $(La_{1-x}Sr_x)_a(Cr_{1-y}M_y)_bO_3$ in which
$0.02 \leq x \leq 0.3$, $0.01 \leq y \leq 0.05$, $0.95 \leq a/b \leq 1.05$, and M = Zn, Fe or Mn, having perovskite structure with a hexagonal lattice structure analyzed by powder X-ray diffraction method at a room temperature, having a dimensional change rate of 0.1% or less at a room temperature of a product applied with a heat treatment at 1000 °C in a reducing atmosphere at an oxygen partial pressure of 5 x $10^{-16}$ (atm) for 10 hours relative to that of a product applied with a heat treatment at 1000 °C in air, and having a relative density of 90% or greater, in which

conductivity $\sigma_{1000,air}$ at 1000 °C in air and conductivity $\sigma_{1000,red}$ at 1000°C in a reducing atmosphere at an oxygen partial pressure of 1 x $10^{-15}$ (atm) satisfy the following equation: $10 \leq \sigma_{1000,air}$ $(\Omega^{-1}cm^{-1})$ and $1 \leq \sigma_{1000,red}$ $(\Omega^{-1}cm^{-1})$
heat expansion coefficient $\alpha$ from 50°C to 1000°C satisfies the following equation:

$$9.8 \times 10^{-6} \leq \alpha \leq 10.7 \times 10^{-6} \text{ (1/K), and}$$

having a 4-point bending strength at a room temperature of 10 (kgf/mm$^2$) or greater according to JIS R1601,

In the present invention, the dimensional change rate at a room temperature of the product applied with the heat treatment at 1000 °C in a reducing atmosphere at the oxygen partial pressure of 5 x $10^{-16}$ (atm) relative to that of the product applied with the heat treatment at 1000 °C in air means percentage for the amount of dimensional change of the latter heat-treated product at a room temperature relative to the dimension of the former heat-treated product at a room temperature, and the dimension means a cubic root of a volume of a unit lattice determined by the lattice constant measured by X-ray diffraction method.

In the basic structure of lanthanum chromite having the perovskite structure (ABO$_3$) represented by the foregoing general formula in which La situates at the A site and Cr situates at the B site, it is necessary that the lanthanum chromite-based ceramics according to the present invention mainly have a perovskite structure in which a portion of La is substituted by Sr and a portion of Cr is substituted by Co, Ni, Zn, Fe or Mn respectively.

In the lanthanum chromite-based ceramics according to the present invention, conductivity is improved by substituting a portion of La by Sr. The substitution amount of Sr is selected within a range from 0.02 to 0.2, preferably, from 0.04 to 0.2 and, more preferably, from 0.08 to 0.15 by molar ratio based on the entire amount of the A site. As the substitution amount of Sr is increased, conductivity at 1000°C is higher. However, if it exceeds 0.2, the dimensional change rate upon reduction is increased to warp a separator for a plate type solid electrolyte fuel cell using stabilized zirconia as the electrolyte. This destroys zirconia as the electrolyte and causes gas leakage due to breakage of the separator itself. Further, since this also increases the heat expansion coefficient, the difference of the heat expansion coefficient relative to that of stabilized zirconia as the electrolyte it brings about destruction of the stabilized zirconia when applied with a heat cycle of temperature rise and fall.

On the other hand, if the substituent amount of Sr is less than 0.02, linearity for the relationship between the heat expansion coefficient and the temperature is worsened, and the heat expansion coefficient changes abruptly in a region lower than 300 °C . Further, if La is present excessively or A/B increases to greater than 1.05 in the sintering product, there is a worry that La segregates at a crystal grain boundary to absorb steams and collapse the sintering product. On the contrary, if A/B is less than 0.95, the second ingredient may possibly be deposited.

Co, Ni, Zn, Fe or Mn as a substituent element for a portion of Cr in the B site of the lanthanum chromite lattice has an effect of lowering the sintering temperature or improving the conductivity of the sintering product. Lanthanum chromite with no such substituent element can not attain a relative density of 95% or greater even when it is sintered at 1700 °C in an atmospheric air under a normal pressure. If the above-mentioned substituent element is substitutionally solid-solubilized in the B site, a dense sintered product having a relative density of 95% or greater can be obtained at an identical sintering temperature. This is assumed to be attributable, for example, to that the crystal grains of lanthanum chromite as powdery raw materials can improve the mass transfer rate in the course of sintering and the sintering temperature is also lowered by the lowering of the melting point.

The substitution amount at the B site of lanthanum chromite is chosen from the following range as a molar ratio based on the entire amount of the B site. If the substituent element is Co, $0.01 \leq y \leq 0.03$, preferably, $0.015 \leq y \leq 0.025$. If the substituent element is Ni, $0.02 \leq y \leq 0.1$, preferably, $0.03 \leq y \leq 0.08$. If it is Zn, Fe or Mn, $0.02 \leq y \leq 0.05$, preferably, $0.03 \leq y \leq 0.05$. If the substituent amount is excessive, the sinterability and the conductivity are improved but the ratio of change between each of dimensions is too great in an air atmosphere and a reducing atmosphere, so that the separator of the plate type solidelectrolyte fuel cell warps when lanthanum chromite is used for the separator. The warpage may destroy the electrode and break the separator itself to deteriorate the sealing property and even lower the cell performance. In addition, if the substitution amount is excessive, the difference of the heat expansion relative to that of zirconia as the electrolyte increases excessively due to increase of the heat expansion coefficient to bring about destruction of zirconia when applied with a heat cycle of temperature rise and fall. On the other hand, if the substitution amount is insufficient, the sinterability is lowered making it difficult to attain a high density.

The effect of specifying the substituent element and the composition is apparent from the following consideration on the physical properties of known lanthanum chromite ceramics.

For instance, Meadow Crafe, et al report that the evaporation amount of Cr in lanthanum chromite is suppressed by Al substitution at the B site in "CERAMIC BULLETIN", 1979, Vol. 58, No. 6 p610 - 615.

However, for the composition:
$La_{0.8}Ca_{0.2}Al_{0.25}Cr_{0.75}O_3$, the heat expansion coefficient from 100 °C to 1000 °C is as low as $9.6 \times 10^{-5}$ (1/K) as compared with the heat expansion coefficient of $10.4 \times 10^{-6}$ (1/K) of zirconia and the difference of the heat expansion coefficient between them exceeds

$$0.5 \times 10^{-6} \ (1/K).$$

In addition, a temperature at which the heat expansion coefficient changes abruptly is present near 400 °C . Further, the relative density at 1600 °C under a normal pressure is 85% and the effect of improving the sinterability is lower as compared with the substituent element such as Co, Ni, Zn, Fe or Mn. Accordingly, the composition is not suitable to a separator for the plate type solid electrolyte fuel cell.

Further, Niels Cristiansen, et al report that the amount of dimensional change during reduction varies depending on the Co substitution amount and also report for
$La_{0.7}Ca_{0.3}Cr_{0.975}Co_{0.025}O_3$ in "PROCEEDING OF THE THIRD INTERNATIONAL SYMPOSIUM ON SOLID STATE FUEL CELLS" (p401). However, since this composition shows a great difference of the heat expansion coefficient relative to that of the electrolyte, it is not suitable to a separator for the plate type solid electrolyte fuel cell.

On the other hand, in the case of a composite oxide represented by $(La_{1-x}M_x)(Cr_{1-y}Ni_y)O_3-\delta$ (in which 0 < x,y < 1), in Japanese Patent Laid-Open No. 51-150692/1976, a composition at x=0.2, y=0.9 causes decomposition in a reducing atmosphere at 1000°C that is usually applied during operation of the plate type solid electrolyte fuel cell and, in addition, the difference of the heat expansion coefficient relative to that of the electrolyte is great and, accordingly, it can not be used as a separator for the plate type solid electrolyte fuel cell.

Further, B. Boven, et al report $La_{0.8}Sr_{0.2}Cr_{0.8}Ni_{0.2}O_3$ in "Zeitschrift fur Naturforschung", vol. 27, No. 2, p363-365 (1972), but this composition shows a great dimensional change before and after reduction and is not suitable to use in a plate type solid electrolyte fuel cell.

For improving the density and the conductivity of a sintering product, it is preferred that y in the above-mentioned general formula is large, namely, near 0.05, but y may be preferably smaller, for example, less than 0.03 depending on the case, for reducing the difference of the heat expansion coefficient relative to that of zirconia or the like.

For obtaining a sintering product it is not always necessary that the A site to B site ratio: a/b is at 1 in lanthanum chromite, but the ratio is selected so as to satisfy the following equation: $0.05 \leqq a/b \leqq 1.05$. If a/b > 1.05 or 1/b < 0.95, it may give an undesired effect on the sinterability or make it difficult to obtain a single phase lanthanum chromite. In particular, if a/b >> 1.05, even a densely sintered product exhibits aging embrittlement due to $La_2O_3$ segregating at the grain boundary.

Further, it is important that the lanthanum chromite-based ceramics according to the present invention have a perovskite structure, with hexagonal lattice structure as analyzed by powdery X-ray diffraction mathod at a room temperature, have a dimensional change rate of 0.1% or less of products applied with a heat treatment at 1000 °C in a reducing atmosphere at an oxygen partial pressure of $5 \times 10^{-16}$ (atm) for 10 hours relative to that of products applied with a heat treatment at 1000 °C in air, and have a relative density of 90% or greater. Since the dimensional change is related with the volume change volume and the solid electrolyte fuel cell is exposed also to a high temperature reducing atmosphere, the dimensional change rate is important like that the heat expansion coefficient. Only when both of the dimensional change rate and the heat expansion coefficient are optimized, they are utilizable as a separator for the solid electrolyte fuel cell.

Further, the crystal grain size has an effect on the intensity. As the crystal grain is larger, the size of defects at the crystal grain boundary is increased to reduce the strength. The crystal grain size is selected within a range of, preferably, 20 μm or less and, particularly, 10 μm or less.

It is further important that the lanthanum chromite-based ceramics according to the present invention have the following physical properties.

(1) The conductivity $\sigma_{1000,air}$ at 1000 °C in air, and conductivity $\sigma_{1000,red}$ at 1000 °C in a reducing atmosphere at an partial pressure of $1 \times 10^{-15}$ (atm) satisfy the following equation:

$$10 \leq \sigma_{1000,air}(\ \Omega^{-1}cm^{-1}\ ),\ preferably,\ 15 \leq \sigma_{1000,air}(\ \Omega^{-1}cm^{-1}\ )$$

and

$$1 \leq \sigma_{1000,red}(\ \Omega^{-1}cm^{-1}\ ),\ preferably,\ 10 \leq \sigma_{1000,red}(\ \Omega^{-1}cm^{-1}\ )$$

(2) The heat expansion coefficient $\alpha$ from 50 °C to 1000 °C satisfies the following equation:

$$9.8 \times 10^{-6} \leq \alpha \leq 10.7 \times 10^{-6}\ (1/K),$$

preferably,

$$10.0 \times 10^{-6} \leq \alpha \leq 10.5 \times 10^{-6}\ (1/K).$$

(3) The 4-point bending strength according to JIS R1601 at a room temperature is 10 (kgf/mm$^2$)or greater, preferably, 14 (kgf/mm$^2$)or greater.

Generally, the reducing atmosphere in the fuel cell usually means an atmosphere in which the oxygen partial pressure on the side of the fuel electrode provides is $1 \times 10^{15}$ atm or less. Further, for enhancing the cell performance such as cell power and efficiency, the cell is sometimes operated at a oxygen partial pressure of lower than $5 \times 10^{-16}$ atm. For instance, in case a cell is operated using LPG as a fuel under the condition with steam modification at a steam/carbon ratio of 3, the gas composition at the operation temperature of 1000 °C comprises about 49% hydrogen, 32% steams, 13% carbon monoxide and 5% carbon dioxide, in which the oxygen partial pressure is $1 \times 10^{-15}$ atm. Further, the gas composition under the operation condition at the steam/carbon ratio of 2, the gas composition comprises about 58% hydrogen, 19% steams, 19% carbon monoxide and 4% carbon dioxide, in which the oxygen partial pressure is $3 \times 10^{-16}$ atm.

In lanthanum chromite, a portion of oxygen constituting crystals of the perovskite structure is released in such a high temperature reducing atmosphere. Oxygen in the crystal is present as a negative bivalent state. Then, if oxygen is released from the crystal lattice, transfer of positive and negative charges in the crystal lattice occurs such as repulsion with respect to positive ions in the vicinity or change of the valence number of Cr ion which are positive ions in the B site from trivalent to tetravalent state so that balance of the attraction and repulsion between the positive and negative ions kept so far till the release of oxygen is lost to extend the distance between the atoms and, accordingly, the length of the unit lattice is increased and, as a result, the volume of the sintered product is increased.

The lanthanum chromite-based ceramics according to the present invention is excellent in the reducing atmosphere. As a result, if a heat treatment at high temperature about 1000°C is applied in a reducing atmosphere at an oxygen partial pressure of $5 \times 10^{-16}$ atm, less dimensional change occurs. The dimensional change rate before and after the reducing heat treatment is 0.1% or less and the 4-point bending strength is neither reduced. Further, the ceramics are also excellent in the oxidation resistance and have a density 90% or greater, further, preferably 95% or greater of the theoretical density, conductivity in air at 1000°C of $10\Omega^{-1}cm^{-1}$ or higher, preferably, $15\Omega^{-1}cm^{-1}$ or higher and conductivity in a reducing atmosphere at an oxygen partial pressure of $1 \times 10^{-15}$ atm of $1\Omega^{-1}cm^{-1}$ or higher, preferably, $10\Omega^{-1}cm^{-1}$ or higher.

Accordingly, the lanthanum chromite-based ceramics according to the present invention are useful as a high temperature conductive material requiring both of the corrosion resistance and the conductivity at high temperature.

Generally, a separator for a plate type solid electrolyte fuel cell is required to have the characteristics of high temperature conductive material including the reduction resistance described above, as well as characteristics such as reduced warpage, for example, 200 µm or less of warpage for 20 cm square plate during operation heat expansion coefficient nearly equal with that of stabilized zirconia as the electrolyte, in view of the sealing property and reduction of ohmic contact resistance with the electrode.

The lanthanum chromite-based ceramics according to the present invention can provide such required characteristics satisfactorily. Namely, when the lanthanum chromite-based ceramics according to the present invention are molded into 5 cm square and 20 cm square plates, exposed at 1000°C to air on one side and to a reducing atmosphere at an oxygen partial pressure of $5 \times 10^{-16}$ atm on the other side and measured for the amount of warpage under no load, the warpage is 1 µm or less for the 5 cm square plate and 300 µm or less for the 20 cm square plate in identical measurement. As the amount of warpage increases, inter-cell contact is deteriorated to increase the resistance of the cells and lower the cell performance, so that the amount of warpage is desirably reduced as low as possible. However, even a 20 cm square plate having an amount of warpage of 500 μm could be flattened by applying a load of 50 kg or geater and no breakage was observed. Accordingly, so long as the amount of warpage is 500 μm or less, preferably, 300 μm or less, more preferably 200 μm or less, sufficient flattening can be attained with no breakage by lamination in a solid electrolyte fuel cell under an operation temperature at 1000°C and load application.

Further, the heat expansion coefficient of the lanthanum chromite-based ceramics according to the present invention is nearly equal with that of stabilized zirconia, even when the plate type solid electrolyte fuel cell is laminated as a large size of about 20 cm square and put to heat cycle up to 1000°C , there is no stabilized zirconia causes no breakage and sealed portion suffers from no destruction.

The present invention also provides a separator for a solid electrolyte type fuel cell containing the lanthanum chromite-based ceramics described above. For instance, the ceramics can be applied, as they are or in combination with other appropriate material, with required molding fabrication to provide a desired separator.

BRIEF DESCRIPTION OF THE DRAWINGS

Fig. 1 is a schematic view for an embodiment of a plate type solid electrolyte fuel cell using ceramics according to the present invention as a separator;
Fig. 2 is a schematic view for an embodiment of a device for measuring breakage of an electrolyte after heat cycle; and
Fig. 3 is a schematic view for an embodiment of a device for measuring the amount of warpage in each of ceramics.

DESCRIPTION OF THE PREFERRED EMBODIMENTS

The present invention also provides a plate type solid electrolyte fuel cell using the separator described above.

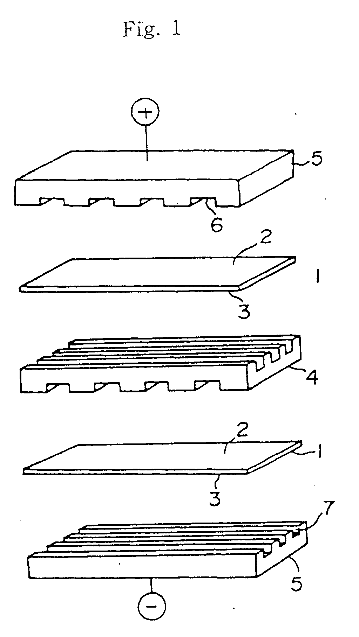

Fig. 1 shows a schematic view of an example of a fuel cell. In the drawing, each of solid electrolyte plates 1 has a cathode 2 on the upper surface and an anode 3 on the lower surface. There are also shown a separator 4 made of lanthanum chromite-based ceramics according to the present invention and external output terminals 5 made of the lanthanum chromite-based ceramics according to the present invention, to which grooves constituting an air flow channel 6 and a fuel flow channel 7 are formed, respectively. The separator serves to separate air and fuel, as well as serves to electrical connection of the cathode 2 and the anode 3 of adjacent units. The external output terminals constitute the air flow channel or the fuel flow channel on both ends of laminated unit cells, and make electric connection with the anode or the cathode. Fig. 1 shows a fuel cell having two unit cells integrated together but three or more unit cells can also be integrated by way of separators.

The lanthanum chromite-based ceramics according to the present invention can be prepared by a customary method of manufacturing ceramics.

For instance, a powder mixture prepared by mixing a lanthanum source, a strontium source, a chromium source and a source of the substituent metal of the group B at a predetermined ratio is calcined at a predetermined temperature, generally, from 1000 to 1600°C , preferably, 1000 to 1200°C to obtain a calcined powder. The time for calcination is usually from 1 to several tens hours, preferably, 1 to 10 hours. Calcination is conducted in an oxygen-containing atmosphere such as an atmospheric air. The pressure for calcination may be an atmospheric pressure.

Then, the calcined powder is molded, for example, by press molding and then sintered to obtain desired ceramics. The sintering temperature is usually 1300°C or higher, preferably, from 1500 to 1700°C . The time for sintering is usually from 1 to 10 hours, preferably, from 1 to 5 hours. The sintering atmosphere is an oxygen-containing atmosphere. Referring to the sintering pressure, a dense sintering product can be obtained under a normal pressure but sintering may be applied under an elevated pressure.

Since the lanthanum chromite-based ceramics according to the present invention provide inherent advantageous effects such as having preferred conductivity in a dense texture, less temperature dependence of the heat expansion coefficient, decreased dimensional change rate and excellent dimensional stability, they are useful as a high temperature conductive material, and can be prepared easily with a good density in an atmospheric air.

Further, since the separator for the plate type solid electrolyte fuel cell according to the present invention contains the ceramics described above, has the characteristics of the ceramics, can improve sealing property or good contact with electrodes, shows satisfactory matching of the heat expansion coefficient with that of the electrolyte, decreased dimensional change in a reducing atmosphere at a low oxygen partial pressure and excellent oxidation resistance and reduction resistance, it is possible to provide a plate type solid electrolyte fuel cell using the separator.

Example

The present invention will be explained more specifically by way of its preferred examples but the scope of the invention is in no way restricted by the examples.

Characteristics for various kinds of ceramics specimens, and characteristics of the effects of the specimens on the electrolyte were evaluated as described below.

(1) Dimensional change rate before and after reduction

A specimen sized about 4 x 3 x 40 mm was placed in an alumina vessel, temperature was elevated at 5°C /min up to 1000°C while flowing a nitrogen gas at 200 ml/min, and kept for about one hour after reaching 1000°C . Then, a predetermined amount of steams/hydrogen was caused to flow and maintained for 20 hours and then quenched down to a room temperature at a temperature lowering rate of 20 °C /min or greater to prepare a specimen after reduction. Then, the dimensional change of the thus treated specimen relative to the specimen before the treatment was determined by the following two methods.

(i) The lattice constant was determined by X-ray diffraction method for each of the specimens before and after reducing treatment. Since the sintered product in case of using it as a separator is a polycrystal material, crystallographic axes are not oriented and the dimensional change of the separator is observed assuming that the change for each of the crystallographic axes was averaged. Accordingly, for averaging the measured change of the lattice constant, the measured lattice constant for each of the specimens was converted into a volume of the unit lattice, the amount of the volume change after the reducing treatment relative to the volume before the reducing treatment was determined and the dimensional change was shown by the percentage of the cubic root of the amount of change relative to the cubic root of the volume before reduction.

(ii) The dimension for each of the specimens before and after the reducing treatment was measured by an order of 1 μm accuracy, and the extent of dimensional change of the specimen after the treatment relative to the dimension of the specimen before the treatment was shown on the percentage basis. The extent of dimentional change of the specimen is evaluated for the longest side of the specimen.

(2) 4-point bending strength before and after the reduction

The strength was measured for the specimens before and after the reducing treatment described in (1) described above according to JIS-R-1601.

(3) Heat expansion coefficient ($\alpha$)

Change of the length of the specimen accompanying the temperature elevation was determined as below by using a quartz-made longitudinal pushing rod type heat expansion measuring device and calculated according to the following equation

$$\alpha = (L_x - L_0)/(L_0 \times (T_x - T_0))$$

where $L_x$ represents the length of the specimen at a temperature $T_x$ (°C) and $L_0$ represents the length of the specimen at a temperature $T_0$ (°C).

A specimen sized 5 x 5 x 10 mm was placed in a quartz specimen chamber 2 in an electric furnace and, sandwiched by using a quartz displacement measuring rod from above. Temperature was elevated at a temperature elevation rate of 10°C /min up to 1000°C while applying a 10 g load so as to keep a contact with the rod, kept at 1000°C for 2 hours and then lowering the temperature at a temperature lowering rate of 10°C/min to a room temperature. Such a heat cycle of the temperature elevation and lowering was repeated twice and numerical value at 1000°C and 50°C in the second cycle were used.

(4) Breakage probability of electrolyte after heat cycle

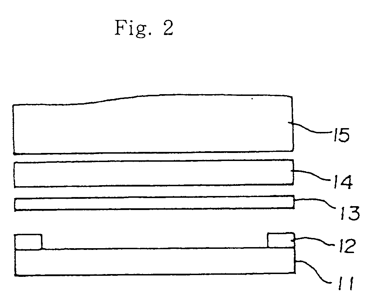

As shown in Fig. 2, a specimen of an optional size and a 8 mol% $Y_2O_3$-doped $ZrO_2$ electrolyte (8YSZ) were stacked in the order of specimen 11/glass 12/8YSZ 13/specimen 14/weight 15. Glass 12 was attached at four sides each with 10 mm width from the edge. The weight was changed in accordance with an area so as to be 0.5 g/cm². The temperature of such an assembly was raised up to 1000 °C at a temperature elevation rate of 1 °C/min, kept at 1000 °C for 2 hours, then, lowered at a temperature lowering rate of 1°C/min to a room temperature. Then, the electrolyte was observed. Such temperature elevation and lowering, and observation of the electrolyte were repeated each twice for the assembly, while placing the electrolyte as it was if no cracking was observed in the course of the temperature elevation and lowering and while replacing the electrolyte, if cracked, with new one with no cracks. Results of the observation conducted for three times in total are shown as a probability of n/3, n being the number of cracking.

(5) Conductivity

The conductivity in an air atmosphere was shown by conductivity (AIR) ($\Omega^{-1}cm^{-1}$) and the conductivity in a reducing atmosphere was shown by conductivity (RED) ($\Omega^{-1}cm^{-1}$), respectively.

(6) Relative density

The relative density was determined by dividing the measured density calculated from the dimension and the mass with a theoretical density. The theoretical density was defined as 6.5 (g/cm$^3$)for strontium-doped lanthanum chromite ceramics and as 6.2 (g/cm$^3$) for calcium-doped lanthanum chromite ceramics.

(7) Amount of warpage

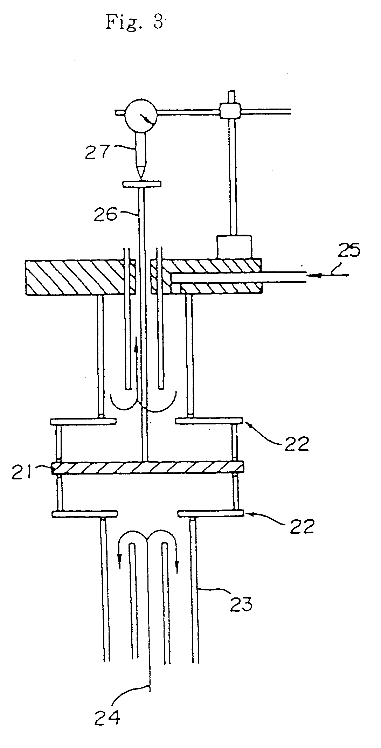

A measuring device for the amount of warpage shown in Fig. 3 was used. In this device, aluminum vessels 22 mounted each corresponding the size of the specimen 21 were mounted above and below the specimen, the vessel 22 was connected with an aluminum tube 23 also serving as a gas introduction port so as to provide a structure in which a fuel gas 24 controlled to an optional oxygen partial pressure by hydrogen/steam ratio is sent from below, while air 25 is sent from above. Aluminum tube/aluminum vessel/sample were sealed by means of glass.
The temperature of the specimen in the aluminum vessel was elevated up to 1000 °C at 5 °C/min, the oxygen partial pressure on the side of the fuel gas was changed at 1000 °C , and the amount of warpage was measured by a dial gage 27 above the device by way of an aluminum rod 26 in contact with the center of the lanthanum chromite-based ceramics plate as the specimen.

Example 1

4383 g of lanthanum oxide (La$_2$O$_3$), 442.8 g of strontium carbonate (SrCO$_3$), 2324.4 g of dichromium trioxide (Cr$_2$O$_3$) and 48.15 g of tricobalt tetraoxide (Co$_2$O$_4$) were wet-mixed by using a ball mill. Alter drying the powder mixture, the temperature was elevated at a temperature elevation rate of 20 °C /min and then calcined at 1200 °C for 2 hours.
The thus obtained calcined product was pulverized again, put to cold isotactic press molding (CIP) at 2000 kgf/cm$^2$, heated to a temperature of 1700°C at a temperature elevation rate of 1°C/min and then sintered at that temperature for 4 hours, to obtain aimed lanthanum chromite-based ceramics.
The thus obtained strontium and cobalt-doped lanthanum chromite can satisfy all the requirements of bending stress ≥ 10 (kgf/mm $^2$), conductivity air ≥ 10($\Omega^{-1}$ cm$^{-1}$), conductivity (red) ≥ 1 ($\Omega^{-1}$ cm$^{-1}$), relative density ≥ 90% and amount of warpage ≤ 500μm, and they are preferred as a separator for the solid electrolyte fuel cell.
As a result of analysis by X-ray diffractiometry for the powder prepared by pulverizing the ceramics, presence of the second phase could not be confirmed and it has been found that strontium and cobalt solid-solubilized in the lanthanum chromite lattice having the perovskite structure.

Examples 2-8 Comparative Examples 1-13

Lanthanum chromite-based ceramics of a perovskite structure were obtained in the same manner as in Example 1, by using predetermined raw materials at a predetermined ratio. Sintering temperature was set to 1500°C for calcium-doped ceramics.
The compositions and various kinds of characteristics of the thus obtained ceramics are shown in Table I.
In table I, X means decomposition in a reducing atmosphere.
In table I, * means evaluation of dimensional change rate by the way of (I) (i) described above and no mark means by way (I) (ii) described above.

Table 1

| Composition | Dimensional change rate % | 4-point bending strength (before) Kgf/mm² | 4-Point Bending Strength (After) Kgf/mm² | Heat Expansion Coefficient (x10⁻⁶) I/K | Breakage Probability of Elektrolyte after Heat Cycle | Conductivity (AIR) (Ω⁻¹cm⁻¹) | Conductivity (RED) (Ω⁻¹cm⁻¹) | Relative Density (%) | Amount of Warpage (μm) |
|---|---|---|---|---|---|---|---|---|---|
| Example 1 $La_{0.9}Sr_{0.1}Cr_{0.98}Co_{0.02}O_3$ | 0.04 | 11.5 | 13.8 | 10.1 | 0/3 | 17 | 11 | 95 | 170 |
| Example 2 $La_{0.85}Sr_{0.15}Cr_{0.98}Co_{0.02}O_3$ | 0.07* | 10.9 | 13.9 | 10.3 | 0/3 | 27 | 10 | 92 | 260 |
| Example 3 $La_{0.9}Sr_{0.1}Cr_{0.97}Co_{0.03}O_3$ | 0.08 | 11.3 | 14.5 | 10.5 | 0/3 | 19 | 11 | 97 | 280 |
| Example 4 $La_{0.95}Sr_{0.1}Cr_{0.97}Co_{0.03}O_3$ | 0* | 11.2 | 14.6 | 9.8 | 0/3 | 11 | 7 | 93 | 40 |
| Example 5 $La_{0.85}Sr_{0.15}Cr_{0.95}Ni_{0.05}O_3$ | 0.09* | 10.6 | 14.9 | 10.1 | 0/3 | 27 | 12 | 91 | 300 |
| Example 6 $La_{0.85}Sr_{0.15}Cr_{0.97}Zn_{0.03}O_3$ | 0.08* | 10.8 | 12.4 | 10.4 | 0/3 | 26 | 10 | 92 | 270 |
| Example 7 $La_{0.85}Sr_{0.15}Cr_{0.97}Fe_{0.03}O_3$ | 0.09* | 10.8 | 13.1 | 10.3 | 0/3 | 26 | 11 | 93 | 290 |
| Example 8 $La_{0.85}Sr_{0.15}Cr_{0.97}Mn_{0.03}O_3$ | 0.08* | 11.0 | 13.3 | 10.4 | 0/3 | 25 | 9 | 92 | 280 |
| Comparative Example 1 $La_{0.9}Ca_{0.1}Cr_{0.98}Co_{0.02}O_3$ | 0.03 | 12.1 | 14.0 | 9.2 | 3/3 | 15 | 10 | 91 | 130 |
| Comparative Example 2 $La_{0.8}Ca_{0.2}Cr_{0.98}Co_{0.02}O_3$ | 0.13 | 12.4 | 14.2 | 9.4 | 2/3 | 31 | 12 | 94 | 380 |
| Comparative Example 3 $La_{0.8}Ca_{0.2}Cr_{0.97}Co_{0.03}O_3$ | 0.22* | 12.9 | 14.0 | 9.8 | 0/3 | 33 | 13 | 94 | 640 |
| Comparative Example 4 $La_{0.7}Ca_{0.3}Cr_{0.97}Co_{0.03}O_3$ | 0.27 | 13.2 | 13.0 | 10.5 | 0/3 | 43 | 11 | 95 | 830 |
| Comparative Example 5 $La_{0.8}Sr_{0.2}Cr_{0.95}Co_{0.05}O_3$ | 0.33 | 11.3 | 9.3 | 11.6 | 3/3 | 42 | 14 | 97 | ≥1000 |
| Comparative Example 6 $La_{0.8}Sr_{0.2}Cr_{0.97}Co_{0.03}O_3$ | 0.23 | 12.1 | 14.7 | 10.9 | 1/3 | 40 | 18 | 97 | 700 |
| Comparative Example 7 $La_{0.8}Sr_{0.2}CrO_3$ | 0 | 8.6 | 11.1 | 10.4 | 0/3 | 13 | 10 | 84 | 0 |
| Comparative Example 8 $La_{0.8}Sr_{0.2}Cr_{0.8}Ni_{0.2}O_3$ | 0.38* | 12.3 | 5.2 | 10.5 | 0/3 | 50 | 4 | 93 | ≥1000 |
| Comparative Example 9 $La_{0.8}Ca_{0.2}Cr_{0.975}Co_{0.025}O_3$ | 0.16 | 11.7 | 13.1 | 9.6 | 2/3 | 27 | 10 | 94 | 450 |
| Comparative Example 10 $La_{0.8}Ca_{0.2}Cr_{0.75}Al_{0.25}O_3$ | 0.14 | 8.9 | 9.7 | 9.5 | 2/3 | 26 | 9 | 86 | 430 |
| Comparative Example 11 $La_{0.8}Ca_{0.2}Cr_{0.1}Ni_{0.9}O_3$ | x | 11.5 | x | x | x | x | x | x | x |
| Comparative Example 12 $La_{0.8}Sr_{0.2}Cr_{0.92}Mg_{0.03}Co_{0.05}O_3$ | 0.34 | 11.2 | 9.1 | 11.8 | 3/3 | 40 | 17 | 95 | ≥1000 |

Lanthanum chromite-based composite oxides shown in Examples 2 to 8 are controlled for dimensional change rate, bending strength, heat expansion coefficient, conductivity, relative density and amount of warpage. Accordingly, when the fuel cell was constituted with them, breakage occurs neither is zirconia as the electrolyte nor in the ceramic material itself. Further, since the relative density is high, conductivity is increased and leakage of gas from the vacant pore is eliminated. Furthermore, since warpage is decreased, sealing property between the electrolyte and separator is enhanced. Accordingly, the material is suitable to a separator for use in solid electrolyte fuel cell.

Comparative Examples 1, 2

Results for doping Ca at the La site instead of doping in Example 1 are shown.

In this case, although the condition for dimensional change rate $\leq$ 0.1% is satisfied, since the heat expansion coefficient is lower than $9.8 \times 10^{-5}$, breakage occurs in $ZrO_2$ when the fuel cell is constituted. Accordingly, it is not preferred as a separator for use in a solid electrolyte fuel cell.

Comparative Examples 3, 4

La site is doped with Ca in the same manner as in Comparative Examples 2, 3.

In the comparative examples, the doping amount of Ca, Co was change so as to attain a suitable heat expansion coefficient from $9.8 \times 10^{-6}$ to $10.7 \times 10^{-6}$ . In this case, the volume change rate is 0.1% or greater and the amount of warpage is increased, to worsen the sealing performance upon constituting the fuel cell. Accordingly, it is not preferred as a separator for use in a solid electrolyte fuel cell.

Comparative Examples 5, 6

The La site was doped with Sr, Co in the same manner as in Example 1 but, since the volume change rate is 0.1% or greater and the amount of warpage is greater than 500 μm, breakage occurs after the heat cycle. Further, the heat expansion coefficient deviates from the allowable range in Comparative Example 5 and it is not preferred as a separator for use in a solid electrolyte fuel cell.

Comparative Example 7

Lanthanum chromite in which only the La site was doped with Sr was used.

In this comparative example, the strength of the material is low [8.6 $(kgf/mm^2)$ before reduction, which is lower than 10 $(kgf/mm^2)$], so that the material itself sometimes breaks. Further, since the relative density is lower and a number of vacant holes are present, there is a high possibility of causing gas leakage. Accordingly, this can not be used as a separator for use in a solid electrolyte fuels.

Comparative Example 8

In this comparative example, lanthanum chromite in which both La and Cr sites were doped with Sr and Ni respectively was used but the substitution amount of Ni at the Cr site was increased (described in the report of B. Boven, et al, Zeitschrift fur Naturforshung).

In this case, since the volume change rate is large and the 4-point bending strength is reduced after reduction, the material itself sometimes breaks. Since the amount of warpage is also large this can not be used as a separator for a solid electrolyte fuel cell.

Comparative Example 9

In this comparative example, lanthanum chromite in which both La and the Ca sites were doped with Sr, Co, respectively, was used but the Co substitution amount for the Cr site was lowered (Niels Christiansen, et al, described in PROCEEDING OF THE THIRD INTERNATIONAL ON SOLID STATE FUEL CELLS (p401).

In this case, since the heat expansion coefficient is too low, breakage results in $ZrO_2$ when the fuel cell is constituted. Accordingly, this can not be used as a separator for use in a solid electrolyte fuel cell.

Comparative Example 10

In this comparative example, both the La site and the Cr site are doped with Ca and Al respectively (Meadow Crafe, et al. "Ceramic bulletin", 1979, Vol. 58, No. 6, p610 - 615).

In this case, since the heat expansion coefficient is excessively low, if the fuel cell is constituted with the ceramic, cracking results in $ZrO_2$. Further, since the relatively density is low, gas leakage occurs.

Accordingly, it can not be used as a separator for solid electrolyte fuel cell.

Comparative Example 11

In this comparative example, the material in which both La and Cr sites were doped with Ca and Ni respectively was used (disclosed in Japanese Patent Laid-Open No. 150692/1976).
In this case, since the material is decomposed when exposed to the reducing atmosphere, it can not be used as a separator for use in a solid electrolyte fuel cell.

Comparative Example 12

In this comparative example, the material in which the La site was doped with Sr and the Cr site was doped with Mg or Co was used (disclosed in Japanese Patent Laid-Open No. 259562/1986).
In this case, since the volume change rate is large and the heat expansion coefficient is also excessive, when the fuel cell is constituted with the material and put to heat cycle, breakage is caused. Further, since the amount of the warpage is also large, gas leakage occurs. Accordingly, it can not be used as a separator for used in a solid electrolyte fuel cell.

## Claims

1. Lanthanum chromite-based ceramics represented by the general formula $(La_{1-x} Sr_x)_a(Cr_{1-y} Co_y)_b O_3$
where $0.02 \leq x \leq 0.2$, $0.01 \leq y \leq 0.03$, $0.95 \leq a/b \leq 1.05$, having perovskite structure with a hexagonal lattice structure as analyzed by powder X-ray diffractiometry at room temperature and having a dimensional change rate of 0.1 % or less at room temperature for products submitted to heat treatment at 1000°C in a reducing atmosphere at an oxygen partial pressure of $5 \times 10^{-16}$ (atm) for 10 hours relative to that for products submitted to heat treatment at 1000°C in air, and having a relative density of 90% or greater, in which
the electric conductivity $\sigma_{1000,air}$ at 1000°C in air and conductivity $\sigma_{1000,red}$ at 1000°C in a reducing atmosphere at an oxygen partial pressure of $1 \times 10^{-15}$ (atm) satisfy the following equation:

$$10 \leq \sigma_{1000,air} (\Omega^{-1} cm^{-1}) \text{ and } 1 \leq \sigma_{1000,red} (\Omega^{-1} cm^{-1})$$

the heat expansion coefficient $\alpha$, as measured in the range of from 50°C to 1000°C satisfies the following equation:

$$9.8 \times 10^{-6} \leq \alpha \leq 10.7 \times 10^{-6} (1/K), \text{ and}$$

having a 4-point bending strength at room temperature of 10 (kgf/mm$^2$) or greater according to JIS R1601.

2. Lanthanum chromite-based ceramics represented by the general formula $(La_{1-x}Sr_x)_x(Cr_{1-y} Ni_y)_b O_3$
where $0.02 \leq x \leq 0.2$, $0.02 \leq y \leq 0.1$, $0.95 \leq a/b \leq 1.05$, having perovskite structure with a hexagonal lattice as analyzed by powder X-ray diffractiometry at room temperature, and having a dimensional change rate of 0.1 % or less at room temperature for products submitted to heat treatment at 1000°C in a reducing atmosphere at an oxygen partial pressure of $5 \times 10^{-16}$ (atm) for 10 hours relative to that for products submitted to heat treatment at 1000°C in air, and having a relative density of 90 % or greater, in which
the electric conductivity $\sigma_{1000,air}$ at 1000°C in air and conductivity $\sigma_{1000,red}$ at 1000°C in a reducing atmosphere at an oxygen partial pressure of $1 \times 10^{-15}$ (atm) satisfy the following equation:

$$10 \leq \sigma_{1000,air} (\Omega^{-1} cm^{-1}) \text{ and } 1 \leq \sigma_{1000,red} (\Omega^{-1} cm^{-1})$$

the heat expansion coefficient $\alpha$, as measured in the range of from 50°C to 1000°C satisfies the following equation:

$$9.8 \times 10^{-6} \leq \alpha \leq 10.7 \times 10^{-6} (1/K), \text{ and}$$

having a 4-point bending strength at room temperature of 10 (kgf/mm$^2$) or greater according to JIS R1601.

3. Lanthanum chromite-based ceramics represented by the general formula $(La_{1-x} Sr_x)_a(Cr_{1-y} M_y)_b O_3$
where $0.02 \leq x \leq 0.2$, $0.02 \leq y \leq 0.05$, $0.95 \leq a/b \leq 1.05$, and M = Zn, Fe or Mn
having perovskite structure with a hexagonal lattice structure as analyzed by powder X-ray diffractiometry at room temperature, and having a dimensional change rate of 0.1 % or less at room temperature for products submitted to heat treatment at 1000°C in a reducing atmosphere at an oxygen partial pressure of $5 \times 10^{-16}$ (atm) for 10 hours relative to that for products submitted to heat treatment at 1000°C in air, and having a relative density of 90 % or greater, in which

the electric conductivity $\sigma_{1000,air}$ at 1000°C in air and conductivity $\sigma_{1000,red}$ at 1000°C in a reducing atmosphere at an oxygen partial pressure of $1 \times 10^{-15}$ (atm) satisfy the following equation:

$$10 \leq \sigma_{1000,air} \ (\Omega^{-1} \ cm^{-1}) \ and \ 1 \leq \sigma_{1000,red}(\Omega^{-1} \ cm^{-1})$$

the heat expansion coefficient $\alpha$, as measured in the range of from 50°C to 1000°C satisfies the following equation:

$$9.8 \times 10^{-6} \leq \alpha \leq 10.7 \times 10^{-6} \ (1/K), \ and$$

having a 4-point bending strength at room temperature of 10 (kgf/mm$^2$) or greater according to JIS R1601.

4. A separator for a plate type solid electrolyte fuel cell containing the lanthanum chromite-based ceramics as defined in any one of claims 1 to 3.

5. A plate type solid electrolyte fuel cell using the separator as defined in claim 4.

**Patentansprüche**

1. Keramiken auf Basis von Lanthanchromit, dargestellt durch die allgemeine Formel $(La_{1-x} Sr_x)_a(Cr_{1-y} Co_y)_b O_3$, wobei $0,02 \leq x \leq 0,2$, $0,01 \leq y \leq 0,03$, $0,95 \leq a/b \leq 1,05$, mit einer Perovskitstruktur mit einer mittels Pulverröntgenbeugung analysierten, hexagonalen Gitterstruktur bei Raumtemperatur und mit einer Größenänderungsrate von 0,1% oder weniger bei Raumtemperatur für Produkte, die einer Wärmebehandlung bei 1000°C in einer reduzierenden Atmosphäre bei einem Sauerstoffpartialdruck von $5 \times 10^{-16}$ (atm) während 10 Stunden unterzogen wurden, relativ zu der von Produkten, die einer Wärmebehandlung bei 1000°C in Luft unterzogen wurden, und mit einer relativen Dichte von 90% oder mehr, in welchen die elektrische Leitfähigkeit $\sigma_{1000,Luft}$ bei 1000°C in Luft und die Leitfähigkeit $\sigma_{1000,red}$ bei 1000°C in einer reduzierenden Atmosphäre bei einem Sauerstoffpartialdruck von $1 \times 10^{-15}$ (atm) die folgende Gleichung erfüllen:

$$10 \leq \sigma_{1000,Luft} \ (\Omega^{-1} \ cm^{-1}) \ und \ 1 \leq \sigma_{1000,red} \ (\Omega^{-1} \ cm^{-1})$$

wobei der im Bereich von 50°C bis 1000°C gemessene Wärmeausdehnungskoeffizient $\alpha$ die folgende Gleichung erfüllt:

$$9,8 \times 10^{-6} \leq \alpha \leq 10,7 \times 10^{-6} \ (1/K), \ und$$

mit einer Vierpunkt-Biegefestigkeit bei Raumtemperatur gemäß JIS R1601 von 10 (kgf/mm$^2$) oder mehr.

2. Keramiken auf Basis von Lanthanchromit, dargestellt durch die allgemeine Formel $(La_{1-x}Sr_x)_a(Cr_{1-y} Ni_y)_b O_3$, wobei $0,02 \leq x \leq 0,2$, $0,02 \leq y \leq 0,1$, $0,95 \leq a/b \leq 1,05$, mit einer Perovskitstruktur mit einem mittels Pulverröntgenbeugung analysierten, hexagonalen Gitter bei Raumtemperatur und mit einer Größenänderungsrate von 0,1% oder weniger bei Raumtemperatur für Produkte, die einer Wärmebehandlung bei 1000°C in einer reduzierenden Atmosphäre bei einem Sauerstoffpartialdruck von $5 \times 10^{-16}$ (atm) während 10 Stunden unterzogen wurden, relativ zu der von Produkten, die einer Wärmebehandlung bei 1000°C in Luft unterzogen wurden, und mit einer relativen Dichte von 90% oder mehr, in welchen die elektrische Leitfähigkeit $\sigma_{1000,Luft}$ bei 1000°C in Luft und die Leitfähigkeit $\sigma_{1000,red}$ bei 1000°C in einer reduzierenden Atmosphäre bei einem Sauerstoffpartialdruck von $1 \times 10^{-15}$ (atm) die folgende Gleichung erfüllen:

$$10 \leq \sigma_{1000,Luft} \ (\Omega^{-1} \ cm^{-1}) \ und \ 1 \leq \sigma_{1000,red} \ (\Omega^{-1} \ cm^{-1})$$

wobei der im Bereich von 50°C bis 1000°C gemessene Wärmeausdehnungskoeffizient $\alpha$ die folgende Gleichung erfüllt:

$$9,8 \times 10^{-6} \leq \alpha \leq 10,7 \times 10^{-6} \ (1/K), \ und$$

mit einer Vierpunkt-Biegefestigkeit bei Raumtemperatur gemäß JIS R1601 von 10 (kgf/mm$^2$) oder mehr.

3. Keramiken auf Basis von Lanthanchromit, dargestellt durch die allgemeine Formel $(La_{1-x} Sr_x)_a(Cr_{1-y} M_y)_b O_3$, wobei $0{,}02 \leq x \leq 0{,}2$, $0{,}02 \leq y \leq 0{,}05$, $0{,}95 \leq a/b \leq 1{,}05$, und M = Zn, Fe oder Mn, mit einer Perovskitstruktur mit einer mittels Pulverröntgenbeugung analysierten, hexagonalen Gitterstruktur bei Raumtemperatur und mit einer Größenänderungsrate von 0,1% oder weniger bei Raumtemperatur für Produkte, die einer Wärmebehandlung bei 1000°C in einer reduzierenden Atmosphäre bei einem Sauerstoffpartialdruck von $5 \times 10^{-16}$ (atm) während 10 Stunden unterzogen wurden, relativ zu der von Produkten, die einer Wärmebehandlung bei 1000°C in Luft unterzogen wurden, und mit einer relativen Dichte von 90% oder mehr, in welchen die elektrische Leitfähigkeit $\sigma_{1000,Luft}$ bei 1000°C in Luft und die Leitfähigkeit $\sigma_{1000,red}$ bei 1000°C in einer reduzierenden Atmosphäre bei einem Sauerstoffpartialdruck von $1 \times 10^{-15}$ (atm) die folgende Gleichung erfüllen:

$$10 \leq \sigma_{1000,Luft} (\Omega^{-1} cm^{-1}) \text{ und } 1 \leq \sigma_{1000,red}(\Omega^{-1} cm^{-1})$$

wobei der im Bereich von 50°C bis 1000°C gemessene Wärmeausdehnungskoeffizient $\alpha$ die folgende Gleichung erfüllt:

$$9{,}8 \times 10^{-6} \leq \alpha \leq 10{,}7 \times 10^{-6} \ (1/K), \text{ und}$$

mit einer Vierpunkt-Biegefestigkeit bei Raumtemperatur gemäß JIS R1601 von 10 ($kgf/mm^2$) oder mehr.

4. Separator für eine Festelektrolyt-Brennstoffzelle vom Plattentyp, der die in einem der Ansprüche 1 bis 3 definierten Keramiken auf Basis von Lanthanchromit enthält.

5. Festelektrolyt-Brennstoffzelle vom Plattentyp, die den wie in Anspruch 4 definierten Separator verwendet.

**Revendications**

1. Une céramique à base de chromite de lanthane répondant à la formule générale $(La_{1-x} Sr_x)_a(Cr_{1-y} CO_y)_b O_3$ où $0{,}02 \leq x \leq 0{,}02$; $0{,}01 \leq y \leq 003$; $0{,}95 \leq a/b \leq 1{,}05$ ayant la structure de la perovskite avec une structure de réseau hexagonal d'après la diffractométrie de poudre aux rayons-X à la température ambiante, et ayant un taux de variation dimensionnelle de 0.1 % ou moins à la température ambiante pour des produits soumis à un traitement thermique à 1000 °C sous atmosphère réductrice à une pression partielle d'oxygène de $5 \times 10^{-16}$ (atm.) pendant 10 heures par rapport à celui de produits soumis à un traitement thermique à 1000 °C à l'air et ayant une densité relative de 90 % ou davantage dans laquelle la conductivité électrique $\sigma_{1000,air}$ à 1000 °C dans l'air et la conductivité $\sigma_{1000,red}$ à 1000 °C sous atmosphère réductrice à une pression partielle d'oxygène $1 \times 10^{-15}$ atm. Satisfait à l'équation suivante:

$$10 \leq \sigma_{1000,air} (\Omega^{-1} cm^{-1}) \text{ et } 1 \leq \sigma_{1000,red} (\Omega^{-1} cm^{-1})$$

le coefficient de dilatation thermique $\alpha$, mesuré dans la plage de 50 °C à 1000 °C satisfait à l'équation suivante:

$$9{,}8 \times 10^{-6} \leq \alpha \leq 10{,}7 \times 10^{-6} \ (1/K), \text{ et}$$

ayant une résistance en flexion 4-points à la température ambiante de 10 ($kgf/mm^2$) ou supérieure selon JIS R1601).

2. Une céramique à base de chromite de lanthane répondant à la formule générale $(La_{1-x} Sr_x)_a(Cr_{1-y} Ni_y)_b O_3$ où $0{,}02 \leq x \leq 0{,}02$; $0{,}02 \leq y \leq 0{,}01$; $0{,}95 \leq a/b \leq 1{,}05$, ayant la structure de la perovskite avec un réseau hexagonal d'après la diffractométrie de poudre aux rayons-X à la température ambiante, et ayant un taux de variation dimensionnelle de 0,1 % ou moins à la température ambiante pour des produits soumis à un traitement thermique à 1000 °C sous atmosphère réductrice à une pression partielle d'oxygène de $5 \times 10^{-16}$ (atm.) pendant 10 heures par rapport à celui de produits soumis à un traitement thermique à 1000 °C à l'air et ayant une densité relative de 90 % ou supérieure dans lequel la conductivité électrique $\sigma_{1000,air}$ à 1000 °C dans l'air et la conductivité $\sigma_{1000,red}$ à 1000 °C sous atmosphère réductrice à une pression partielle d'oxygène $1 \times 10^{-15}$ atm. satisfait à l'équation suivante:

$$10 \leq \sigma_{1000,air} (\Omega^{-1} cm^{-1}) \text{ et } 1 \leq \sigma_{1000,red} (\Omega^{-1} cm^{-1})$$

le coefficient de dilatation thermique $\alpha$, mesuré dans la plage de 50 °C à 1000 °C satisfait à l'équation suivante:

$$9,8 \times 10^{-6} \leq \alpha \leq 10,7 \times 10^{-6} \ (1/K), \ \text{et}$$

ayant une résistance en flexion 4-points à la température ambiante de 10 (kgf/mm$^2$) ou supérieure selon JIS R1601).

3. Une céramique à base de chromite de lanthane répondant à la formule générale $(La_{1-x} Sr_x)_a(Cr_{1-y} M_y)_b O_3$ où 0,02 $\leq$ x $\leq$ 0,02; 0,02 $\leq$ y $\leq$ 0,05; 0,95 $\leq$ a/b $\leq$ 1,05 et M = Zn, Fe ou Mn, ayant la structure de la perovskite avec un réseau hexagonal d'après la diffractométrie de poudre aux rayons-X à la température ambiante et ayant un taux de variation dimensionnelle de 0,1 % ou moins à la température ambiante pour des produits soumis à un traitement thermique à 1000 °C sous atmosphère réductrice à une pression partielle d'oxygène de 5 x 10$^{-16}$ (atm.) pendant 10 heures par rapport à celui de produits soumis à un traitement thermique à 1000 °C à l'air et ayant une densité relative de 90% ou supérieure dont la conductivité électrique $\sigma_{1000, \ air}$ à 1000 °C dans l'air et la conductivité $\sigma_{1000, red}$ à 1000 °C sous atmosphère réductrice à une pression partielle d'oxygène de 1x10$^{-15}$ atm. satisfait à l'équation suivante:

$$10 \leq \sigma_{1000,air} \ (\Omega^{-1} \ cm^{-1}) \ \text{et} \ 1 \leq \sigma_{1000,red} \ (\Omega^{-1} \ cm^{-1})$$

le coefficient de dilatation thermique $\alpha$, mesuré dans la plage de 50 °C à 1000 °C satisfait à l'équation suivante:

$$9,8 \times 10^{-6} \leq \alpha \leq 10,7 \times 10^{-6} \ (1/K), \ \text{et}$$

ayant une résistance en flexion 4-points à la température ambiante de 10 (kgf/mm$^2$) ou supérieure selon JIS R1601).

4. Un séparateur pour une cellule de combustible électrolytique solide de type plaque contenant des céramiques à base de chromite de lanthane, telles que définies dans une quelconque des revendications 1 à 3.

5. Une cellule de combustible électrolytique solide de type plaque faisant emploi de séparateurn tel que défini dans la revendication 4.

Fig. 1

Fig. 2

Fig. 3